# EUROPÄISCHE PATENTSCHRIFT

(11) **EP 0 922 878 B1**
(45) Veröffentlichungstag und Bekanntmachung des Hinweises auf die Patenterteilung: **01.02.2006**
(21) Anmeldenummer: 98120393.8
(22) Anmeldetag: 28.10.1998
(51) Int. Cl.: F16F 15/139, F16F 15/137

(54) **Torsionsschwingungsdämpfer**
Torsional vibration damper
Amortisseur de vibrations torsionelles

(30) Priorität: 29.10.1997 DE 19747734; 22.04.1998 DE 19817906
(43) Veröffentlichungstag der Anmeldung: 16.06.1999
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, 52351 Düren (DE); Heidingsfeld, Dietmar, Dipl.-Ing., 52078 Aachen (DE)
(74) Vertreter: Castell, Klaus

(56) Entgegenhaltungen:
- DE-A- 3 436 012
- DE-A- 3 516 291
- DE-A- 3 806 013
- DE-A- 3 807 133
- DE-A- 19 611 258
- US-A- 5 370 581
- US-A- 5 496 216
- US-A- 5 687 827

## Beschreibung

Die Erfindung betrifft einen Torsionsschwingungsdämpfer, insbesondere für Kupplungen, der aus einer Primärmasse und einer Sekundärmasse besteht.

Ein derartiger Torsionsschwingungsdämpfer ist zum Beispiel in der EP 0 718 518 A1 beschrieben, die einen Stand der Technik nach Artikel 54(3) und (4) EPÜ bildet und Primärmasse und einer Sekundärmasse zeigt, zwischen welchen eine Anordnung tangential wirksamer Spiralfedern und Spannkörper derart angebracht ist, daß Primärmasse und Sekundärmasse mit einer durch die Federanordnung bestimmbaren Verdrehkennlinie bis zu einem Maximalwinkel verdreht werden können. Die Spannkörper bestehen hierbei aus Zylinder und Kolben, die einen Hohlraum einschließen, der mit einem zylindrischen Körper aus elastoplastischem Werkstoff gefüllt ist, dessen Durchmesser kleiner als der Innendurchmesser des Hohlraums und derart dimensioniert ist, daß er nach anfänglichem, geringem Weg des Kolbens den Hohlraum völlig ausfüllt. Hierbei dienen die Federn und die Spannkörper als Innendämpfer, um durch einen Antrieb erregte Drehschwingungen im Antriebsstrang zu vermindern.

Die DE 41 28 868 A1 beschreibt einen Torsionsschwingungsdämpfer für Kupplungen ähnlicher Art, bei welchem jedoch die Primärmasse und die Sekundärmasse lediglich durch tangential wirksame Spiralfedern verbunden sind. Als eigentliches Dämpfungsmoment ist ein Reibring vorgesehen, der erst nach einem bestimmten Verdrehwinkel zwischen Primärmasse und Sekundärmasse zur Wirkung kommen soll.

Andererseits offenbart die DE 196 11 258 A1 einen Torsionsschwingungsdämpfer, bei welchem Mitnehmer erst nach einem gewissen Spiel ein elastisches Element ergreifen, welches dann, ab einem bestimmten Verdrehwinkel, beidseits von Mitnehmern eingeschlossen und von diesen komprimiert wird. Hierbei liegt das elastische Element unmittelbar sowohl an der Primärmasse als auch an der Sekundärmasse bzw. mit diesen mitbewegten Baugruppen an und wirkt mit diesen reibend in Wechselwirkung. Dieses hat zur Folge, dass bei kleinen Verdrehwinkeln die Lage der elastischen Elemente und somit deren wirksame Reibfläche nicht genau definiert ist und bei niedrigen Lasten und hohen Drehwinkeln die Reibeinrichtungen sperrt.

Diese bekannten Systeme haben somit den Nachteil, dass sie nur einen Teil des Arbeitsspektrums eines Antriebs umfassen, aber im übrigen Lastbereich wirkungslos sind. Das Problem besteht darin, daß für den Lastbereich eine dem übertragenen Drehmoment und der Drehzahl entsprechend hohe Federkraft und Dämpfung erforderlich sind, während im Leerlauf nur geringe Federkräfte und so gut wie keine Dämpfung vorliegen dürfen, um eine Leerlaufentkopplung zu erreichen. Im kritischen Drehzahlbereich, d. h. bei Drehzahlen im Bereich der Eigenfrequenz, ist aber eine sehr hohe Dämpfung erforderlich, da andernfalls deutliche Überhöhungen der Drehbeschleunigung gegenüber der Primärseite auftreten. Dieser Drehzahlbereich wird vor allem beim Anlassen des Motors, aber auch bei Lastwechselsituationen durchlaufen. Im Resonanzfall können dynamische Momente auftreten, die das Vielfache des Nennmoments betragen.

Es ist Aufgabe vorliegender Erfindung, einen Torsionsschwingungsdämpfer, insbesondere für Kupplungen, bereit zu stellen, bei dem die Dämpfungscharakteristik optimal angepaßt werden kann.

Als Lösung schlägt die Erfindung einen aus einer Primärmasse und einer Sekundärmasse bestehenden Torsionsschwingungsdämpfer mit einem Schleppelement vor, der sich gegenüber dem nächstkommenden Stand der Technik gemäß DE-A-19 611 258 durch die kennzeichnenden Merkmale des Anspruchs 1 auszeichnet. Hierbei ist das Reibelement mit der Sekundärmasse bzw. der Primärmasse reibend wirkverbunden und der Mitnehmen ist mit der anderen der vorgenannten Massen antriebsverbunden.

Vorteilhafterweise ist die Druckeinrichtung so angeordnet, daß die auf die Druckeinrichtung wirkende Kraft die Reibung zwischen Reibelement und entweder der Primärmasse oder der Sekundärmasse erhöht. Wie nachfolgend näher erläutert wird, kann die Druckeinrichtung durch einen Reibringrand oder aber durch einen entsprechend bezüglich eines Reibringes angeordneten Spreizring gebildet sein, die so mit dem elastischen Element in Wirkverbindung stehen, daß eine von dem elastischen Element auf die Druckeinrichtung, also auf den Reibringrand oder den Spreizring, ausgeübte Kraft die Reibung des Reibelements mit der Sekundärmasse bzw. der Primärmasse erhöht. Auf diese Weise ist die durch das Reibelement bedingte Reibung von der auf das elastische Element ausgeübten Kraft und somit von dem Verdrehwinkel zwischen Primärmasse und Sekundärmasse abhängig.

Durch die erfindungsgemäße Anordnung läßt sich somit die Dämpfungscharakteristik, insbesondere auch bei großen Kräften, in geeigneter Weise anpassen.

Vorteilhafterweise weist das elastische Element ein in einem Hohlraum angeordnetes gummiartiges Element auf. Hierdurch läßt sich die Dämpfungscharakteristik des erfindungsgemäßen Torsionsschwingungsdämpfers sowohl bei großen als auch bei kleinen Kräften bzw. Verdrehwinkeln vorteilhaft beeinflussen. Bei geringen Kräften bzw. Verdrehwinkeln verhält sich das gummiartige Element ähnlich einer elastischen Feder. Wird das gummiartige Element weiter komprimiert, bis es den Hohlraum ausfüllt, so verhält sich das aus Hohlraum und gummiartigem Element bestehende elastische Element, als wenn es eine hydraulische Flüssigkeit umfassen würde. In diesem Zustand kann das elastische Element wesentlich höheren Kräften elastisch begegnen, als bei bekannten Torsionsschwingungsdämpfern.

Besonders wenn das elastische Element bei einer Relativbewegung zwischen Primär- und Sekundärmasse in tangentialer Richtung komprimiert wird, ist es von Vorteil, wenn das gummiartige Element in tangentialer Richtung spielfrei in dem Hohlraum angeordnet ist. Hierdurch setzt die federnde Wirkung des gummiartigen Elements unmittelbar ein.

Ein besonders einfacher und somit betriebssicherer Aufbauf folgt in diesem Fall, wenn der Hohlraum in radialer Richtung durch die Druckeinrichtung begrenzt wird. Die tangentiale Kompression des gummiartigen Elements bedingt dessen radiale bzw. axiale Ausdehnung. Somit kann das gummiartige Element radial auf die Druckeinrichtung wirken und auf diese Weise die Reibung zwischen Reibelement und entweder der Primär- oder der Sekundärmasse erhöhen. Ist auch eine axial wirkende Druckeinrichtung vorgesehen, so wird auch diese entsprechend mit einer Kraft beaufschlagt.

Durch konstruktive Ausgestaltung des Volumenverhältnisses zwischen Hohlraum und gummiartigem Element sowie deren Geometrien läßt sich das Verhalten des Schleppelements in Abhängigkeit von dem Verdrehwinkel zwischen Primär- und Sekundärmasse einstellen. Insbesondere ist es auch möglich, das gummiartige Element so zu wählen, das es den Hohlraum bereits im entspannten Zustand an einigen Stellen auch in radialer Richtung ausfüllt. Bei einer axialen Kompression des gummiartigen Elementes werden dann unmittelbar, wenn auch ggf. nur sehr geringe, Kräfte auf die radial angeordnete Druckeinrichtung ausgeübt. In ähnlicher Weise kann das gummiartige Element axial ausgestaltet sein, um eine axial angeordnete Druckeinrichtung mit einer gewählten Kraft zu beaufschlagen.

Es versteht sich, daß der Hohlraum nicht vollständig verschlossen sein muß. Es genügt vielmehr, daß für eine sichere Unterbringung des elastischen Elements bzw. des gummiartigen Elementes gesorgt ist bzw. eine das gummiartige Element ausreichend in dem Hohlraum haltende Umrandung des Hohlraums gewährleistet ist, so daß das elastische Element nicht übermäßig aus dem Hohlraum gepreßt werden kann.

Die Krafteinwirkung auf das gummiartige Element kann durch eine Volumenverringerung des Hohlraums aufgrund einer relativen Drehbewegung zwischen Primär- und Sekundärmasse erfolgen. Insbesondere ist es vorteilhaft, wenn diese Volumenverringerung in tangentialer Richtung erfolgt, da eine derartige Bewegung der Relativbewegung zwischen Primär- und Sekundärmasse entspricht und auf kraftumlenkende Maßnahmen verzichtet werden kann. Insbesondere werden auch axiale Kräfte zwischen Primär- und Sekundärmasse vermieden.

Unabhängig davon kann der aus einer Primärmasse und einer Sekundärmasse bestehenden Torsionsschwingungsdämpfer ein Schleppelement umfassen, das zumindest ein Reibelement mit mindestens einem im wesentlichen tangential wirksamen Anschlag, zumindest einen im wesentlichen tangential wirksamen Mitnehmer und zumindest ein elastisches Element, welches zwischen dem Anschlag und dem Mitnehmer tangential wirksam angeordnet ist, umfaßt, wobei das Reibelement entweder mit der Primärmasse oder mit der Sekundärmasse reibend wirkverbunden und der Mitnehmer mit der anderen der vorgenannten Massen antriebsverbunden ist.

Die tangential wirksame Anordnung des elastischen Elements zwischen dem Anschlag des Reibelements und dem Mitnehmer ermöglicht es, auch bei kleinsten Verdrehwinkeln zwischen Primär- und Sekundärmasse die durch das Reibelement vermittelte Dämpfungscharakteristik, also die Verdrehkennlinien, optimal anzupassen. Insbesondere die bei Lastwechseln im Leerlaufbereich auftretenden, von sehr kleinen Kräften herrührenden Geräusche bei Kupplungen lassen sich auf diese Weise gegenüber den bekannten Kupplungen noch wirkungsvoller vermeiden.

Die Druckeinrichtung kann derart ausgestaltet sein, daß sie radial wirksam ist. Dieses hat den Vorteil, daß die radial auf die Druckeinrichtung einwirkenden Kräfte durch den Torsionsschwingungsdämpfer selbst aufgefangen werden können und so durch diesen keine axialen Kräfte auf die übrigen Baugruppen, wie zum Beispiel die Kupplung, bedingt werden. Dieser Vorteil kann auch durch die Verwendung eines Reibelementes mit einer Reibfläche, die eine radial nach außen weisende Oberflächenkomponente aufweist, erreicht werden.

Um auch bei durch das elastische Element unbeaufschlagter oder wenig beaufschlagter Druckeinrichtung einen Mindestreibwert zwischen Reibelement und Primär- bzw. Sekundärmasse zu erreichen, kann das Reibelement eine Vorspannfeder umfassen. Insbesondere im geringen Lastbereich läßt sich hierdurch eine Anpaßmöglichkeit weiter erhöhen.

Es versteht sich, daß es bei den vorgenannten Anordnungen unerheblich ist, ob der Mitnehmer mit der Primärmasse oder mit der Sekundärmasse antriebsverbunden bzw. ob das Reibelement durch Reiben an der Sekundärmasse oder durch Reiben an der Primärmasse dem System Energie entzieht.

Vorzugsweise ist in tangentialer Richtung beidseits des Mitnehmers jeweils ein elastisches Element angeordnet, an welchem seinerzeits jeweils ein Anschlag in tangentialer Richtung angeordnet ist, bzw. umgekehrt. Hierdurch können die Vorteile vorliegender Erfindung unabhängig von der Verdrehrichtung zwischen Primär- und Sekundärmasse genutzt werden.

Bei einer konstruktiv einfachen Ausgestaltung ist das Schleppelement ringförmig, als Schleppring ausgebildet. Entsprechend kann ein Mitnehmerring vorgesehen sein, der einen oder mehrere Mitnehmer aufweist. Die Mitnehmer bzw. der Mitnehmerring können Ausnehmungen aufweisen, in welche an der Primärmasse oder der Sekundärmasse vorgesehene Nocken eingreifen. Hierdurch wird in einfacher Weise eine Antriebsverbindung zwischen Mitnehmer bzw. Mitnehmerring und der entsprechenden Masse gewährleistet. Es versteht sich, daß auch andere Verbindungen zwischen Mitnehmer und der entsprechenden Masse, Primärmasse oder Sekundärmasse, vorgesehen sein können, um eine Antriebsverbindung zu realisieren. Insbesondere können auch der Mitnehmer bzw. der Mitnehmerring mit Nocken versehen sein, die in Ausnehmungen der entsprechenden Masse eingreifen.

Insbesondere wenn als Schleppelement ein Schleppring Verwendung findet, ist die Verwendung eines Reibringes als Reibelement vorteilhaft. Wie bereits vorstehend ausgeführt, lassen sich durch eine Reibfläche mit einer radial nach außen weisenden Oberflächenkomponente die auf die übrigen Baugruppen, wie zum Beispiel die Kupplung wirkenden Axialkräfte reduzieren. Derartige Oberflächen lassen sich zum Beispiel durch einen Reibring mit im wesentlichen L-förmigem Querschnitt mit einem radial außenliegenden Schenkel bzw. durch einen Reibring mit im wesentlichen U-förmigem, in eine axiale Richtung offenen Querschnitt realisieren. Diese Reibringe sollten in entsprechenden Aussparungen, zum Beispiel einer U-förmigen Nut, der entsprechenden Masse reibend rotierbar angeordnet sein.

Bei der Verwendung eines Reibringes mit im wesentlichen L-förmigem Querschnitt kann die in der entsprechenden Masse zu bearbeitende Fläche minimiert werden und es ist lediglich nötig, den mit der Reibfläche in Kontakt kommenden Bereich der Masse entsprechend zu bearbeiten, während der Rest als Gußteil roh verbleiben kann.

Um eine radiale Verlagerung der radial angeordneten Reibflächen aufgrund der auf die Druckeinrichtung ausgeübten Kräfte zu erleichtern, können in der entsprechenden Fläche axiale Schlitze, bzw. wenigstens ein axialer Schlitz, vorgesehen sein.

An sich kann der Reibring selbst, zum Beispiel wenn er einen U-förmigen Querschnitt aufweist, zur Bildung des das gummielastische Element aufnehmenden Hohlraums genutzt werden, wenn dieser an seiner offenen Seite zum Beispiel durch den Mitnehmerring in geeigneter Weise abgeschlossen wird. Dieses stellt jedoch verhältnismäßig hohe Anforderungen an die Ver- bzw. Bearbeitung des Reibringes und ist bei der Verwendung eines L-förmigen Reibringes nur schwer realisierbar. Vorteilhafterweise kann das Reibelement neben dem Reibring noch einen Spreizring, der zumindest einen Anschlag aufweist und im wesentlichen U-förmig in einer axialen Richtung offen ausgelegt ist, umfassen, wobei dieser Spreizring von dem Mitnehmerring zur Bildung des im wesentlichen abgeschlossenen Hohlraums abgedeckt wird. Dieser Spreizring wird so an dem Reibring angeordnet, daß bei einer Expansion oder Verlagerung des Spreizringes die Reibung des Reibringes an der Primär- bzw. Sekundärmasse erhöht wird. Durch einen derartigen Spreizring wird auf besonders einfache Weise die Verwendung eines L-förmigen Reibringes ermöglicht.

Bei der Verwendung eines Spreizringes kann auf einfache Weise eine Vorspannung des erfindungsgemäßen Torsionsschwingungsdämpfers erreicht werden, indem der Spreizring an einer Stelle unterbrochen ist und in diese Unterbrechung eine tangential wirksame Vorspannfeder eingesetzt ist. Wird nun dieser Spreizring in den entsprechenden Reibring eingelegt, bedingt die tangential wirksame Vorspannfeder eine radiale Expansion des Spreizrings, also eine radiale Vergrößerung des Spreizringdurchmessers. Hierdurch wird eine Vorspannung erreicht, die besonders gleichmässig auf den Umfang des Reibringes verteilt ist.

Der Torsionsschwingungsdämpfer kann einen weiteren Mitnehmer aufweisen, der mit einem Anschlag ab einem bestimmten Verdrehwinkel wechselwirkt. Auf diese Weise kann die Kennlinie des Schleppelements mit größerer Variabilität an bestimmte Erfordernisse angepaßt werden. Insbesondere ist es möglich, den Mitnehmer und den Anschlag derart auszugestalten, daß diese im wesentlichen starr miteinander wechselwirken. Bei einer derartigen Anordnung wird ab dem bestimmten Verdrehwinkel dann das Schleppelement von den weiteren Mitnehmer mitgenommen, so daß das elastische Element nicht weiter komprimiert wird. Bei einer derartigen Anordnung ist dann die Kennlinie des Schleppelements ab dem bestimmten Verdrehwinkel konstant.

Je nach Erfordernissen, können der weitere Mitnehmer und der Anschlag im wesentlichen elastisch miteinander wechselwirken. Bei einer derartigen Anordnung ist es vorteilhaft, wenn zwischen dem weiteren Mitnehmer und dem Anschlag ein elastisches Element vorgesehen ist. Auf diese Weise wird die Kennlinie des Schleppelementes ab dem bestimmten Verdrehwinkel durch zwei elastische Elemente bestimmt.

Es versteht sich, daß das Vorhandensein eines elastischen Elementes zwischen einem Mitnehmer einer der Massen sowie einem Anschlag eines Schleppelementes unabhängig von den übrigen Merkmalen des Torsionsschwingungsdämpfers vorteilhaft Verwendung finden kann. Selbiges gilt für das Vorhandensein eines weiteren Mitnehmers, der mit einem Anschlag erst ab einem bestimmten Verdrehwinkel wechselwirkt. Durch letztere Anordnung kann insbesondere auch gewährleistet werden, daß das Schleppelement schlagartig ab dem bestimmten Verdrehwinkel mit dem Mitnehmer und somit mit einer der beiden Massen mitgenommen wird.

Nach der Erfindung können Primär- und Sekundärmasse aufgrund der geometrischen Ausgestaltung des Torsionsschwingungsdämpfers nur um bestimmte Drehwinkel gegeneinander verdreht werden. Eine derartige geometrische Ausgestaltung kann z. B. durch ein Ineinandergreifen von Primär- und Sekundärmasse mit bestimmten Spiel oder durch das Vorhandensein von Keilen, die nach bestimmten Drehwinkeln ein Weiterdrehen verhindern, realisiert sein.

Weitere Vorteile und Ausgestaltungen eines erfindungsgemäßen Torsionsschwingungsdämpfers finden sich in der nachfolgenden Beschreibung und anliegender Zeichnung. Es zeigt,
- Figur 1: eine erste Ausführungsform eines erfindungsgemäßen Torsionsschwingungsdämpfers im Schnitt entlang der Linie I-I nach Figur 2,
- Figur 2: den Torsionsschwingungsdämpfer nach Figur 1 im Schnitt entlang der Linie II-II,

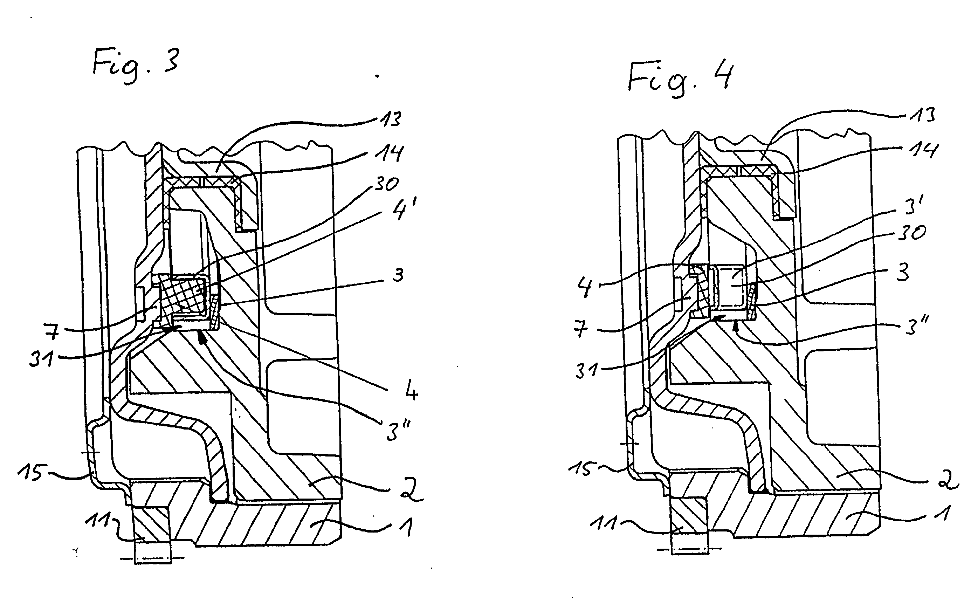

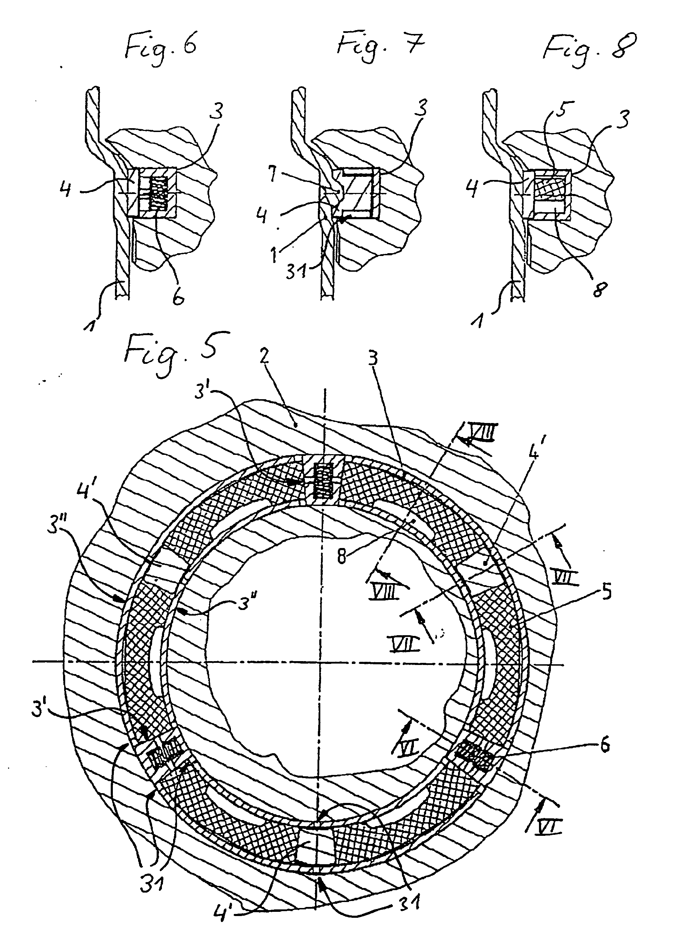

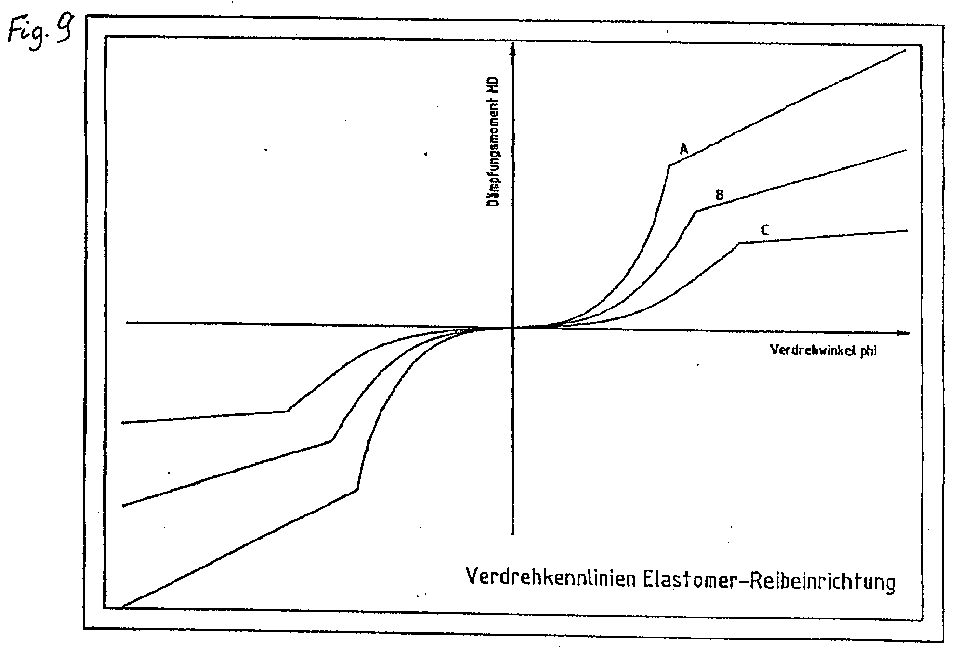

- Figur 3: einen Schnitt durch den Torsionsschwingungsdämpfer nach Figur 1 entlang der Linie III-III in Figur 1,
- Figur 4: einen Schnitt durch den Torsionsschwingungsdämpfer nach Figur 1 entlang der Linie IV-IV in Figur 1,
- Figur 5: eine zweite Ausführungsform eines erfindungsgemäßen Torsionsschwingungsdämpfers in ähnlicher, aber ausschnittsweiser Darstellung wie Figur 1,
- Figur 6: einen Ausschnitt durch den Torsionsschwingungsdämpfer nach Figur 5 entlang der Linie VI-VI in Figur 5,
- Figur 7: einen Ausschnitt durch den Torsionsschwingungsdämpfer nach Figur 5 entlang der Linie VII-VII in Figur 5,
- Figur 8: einen Ausschnitt des Torsionsschwingungsdämpfers nach Figur 5 entlang der Linie VIII-VIII,
- Figur 9: beispielhafte Dämpfungscharakteristiken des Torsionsschwingungsdämpfers nach Figur 5 skizzenhaft,
- Figur 10: eine zweite Ausführungsform eines erfindungsgemäßen Torsionsschwingungsdämpfers in ähnlicher Darstellung wie Figur 1 und
- Figur 11: eine beispielhafte Dämpfungcharakteristik des Torsionsschwingungsdämpfers nach Figur 10 skizzenhaft.

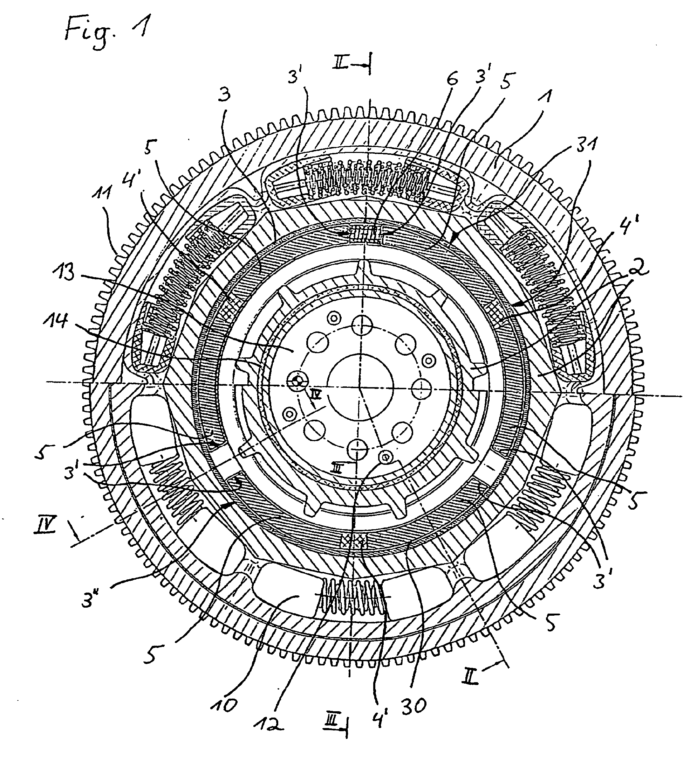

Eine erste Ausführungsform eines erfindungsgemäßen Torsionsschwingungsdämpfers umfaßt eine Primärmasse 1 mit einem Anlasserzahnkranz 11 und eine Sekundärmasse 2, die mittels einer Lagerhalbschale 14 und einem durch Rohrnieten 12 mit der Primärmasse 1 fest verbundenen Zentralflansch 13 in tangentialer Richtung drehbar mit der Primärmasse 1 verbunden ist. In vorliegender Beschreibung bedeutet "axial" eine zur Zeichenebene der Figur 1 senkrechte Richtung, "radial" von der Drehachse des Torsionsschwingungsdämpfers weg- oder eine zu der Drehachse des Torsionsschwingungsdämpfers hinweisende Richtung und "tangential" eine sowohl senkrecht auf einer radialen als auch auf jeder axialen Richtung stehende Richtung.

Der Torsionsschwingungsdämpfer umfaßt des weiteren ein Geberblech 15 sowie mehrere zwischen Keilen angeordnete, an sich bekannte Druckfedern 10, von welchen nur eine beispielhaft beziffert ist.

In der Sekundärmasse 2 liegt ein L-förmiger Reibring 3, der mit axialen Schlitzen 31 (nur beispielhaft beziffert) versehen ist und einen Reibringrand 3 umfaßt, der im wesentlichen axial ausgerichtet ist und reibend an der Sekundärmasse 2 anliegt. Auch der im wesentlichen radial ausgerichtete Teil des L-förmigen Reibringes 3 liegt an der Sekundärmasse 2 an.

In dem Reibring 3 ist ein Spreizring 30 mit U-förmigem Querschnitt angeordnet. Dieser weist Anschläge 3' auf.

Desweiteren umfaßt der Torsionsschwingungsdämpfer einen Mitnehmerring 4, der spielfrei mit der Primärmasse 1 durch Nocken 7 verbunden ist. Dieser Mitnehmerring umfaßt drei Mitnehmer 4', die in den Spreizring 30 eingreifen.

Der Spreizring 30 und der Mitnehmerring 4 umschließen Hohlräume 8, die jeweils in tangentialer Richtung durch einen Mitnehmer 4' bzw. Anschlag 3' begrenzt sind. Die Hohlräume 8 weisen einen annähernd quadratischen Querschnitt auf.

In den Hohlräumen 8 sind ringschnurartige Gummielemente 5 angeordnet, deren Durchmesser der Seitenlänge des vorgenannten Quadrates etwa entsprechen. Die Länge der Gummielemente 5 entspricht der Bogenlänge der Hohlräume 8.

Bei einer Verdrehung der Primärmasse 1 bezügliche der Sekundärmasse 2 füllen somit zunächst die Gummielemente 5 den quadratischen Raum aus und wirken dann verstärkt auf die Wandung des Spreizringes 30. Hierdurch wird der Spreizring 30 gespreizt und die Reibung des Reibringes 3 mit der Sekundärmasse 2 erhöht.

Solange das Gummielement 5 den Hohlraum 8 nicht vollständig ausgefüllt hat, wirkt es im wesentlichen wie eine Feder. Ist der Hohlraum 8 vollständig durch das Gummielement 5 ausgefüllt, entspricht das Verhalten des Gummielementes 5 bei einer weiteren Verdrehung der Primärmasse 1 bezüglich der Sekundärmasse 2 den Verhalten einer hydraulischen Feder. Folglich steigt die Federkonstante in diesem Falle extrem an und der Torsionsschwingungsdämpfer kann größere Kräfte aufnehmen. Darüberhinaus wird in diesem Falle die Reibung des Reibringes 3 mit der Sekundärmasse erhöht, so daß auch die Dämpfung des Torsionsschwingungsdämpfers ansteigt.

Es versteht sich, daß durch geeignete Wahl der Form des Hohlraumes 8 sowie der Form der Gummielemente dieses charakteristische Verhalten des Torsionsschwingungsdämpfers gewünschten Anforderungen angepaßt werden kann.

Dadurch daß die Gummielemente 5 in ihrer Länge der Länge der Hohlräume 8 entsprechen, spricht dieser Torsionsschwingungsdämpfer auch bei geringer Last in geeigneter Weise an, wobei hierbei die Gummielemente 5 annähernd wie elastische Federn wirken.

Durch die in Figur 1 ersichtliche, symmetrische Anordnung der Hohlräume 8 bzw. Gummielemente 5 bezüglich der Anschläge 3' und der Mitnehmer 4 ist das Verhalten dieses Torsionsschwingungsdämpfers von der relativen Drehrichtung der Primärmasse 1 und der Sekundärmasse 2 zueinander unabhängig. Es versteht sich, daß durch geeignete Wahl der Gummielemente 5 bzw. Hohlräume 8 auch eine unsymmetrische Dämpfungscharakteristik erzielt werden kann.

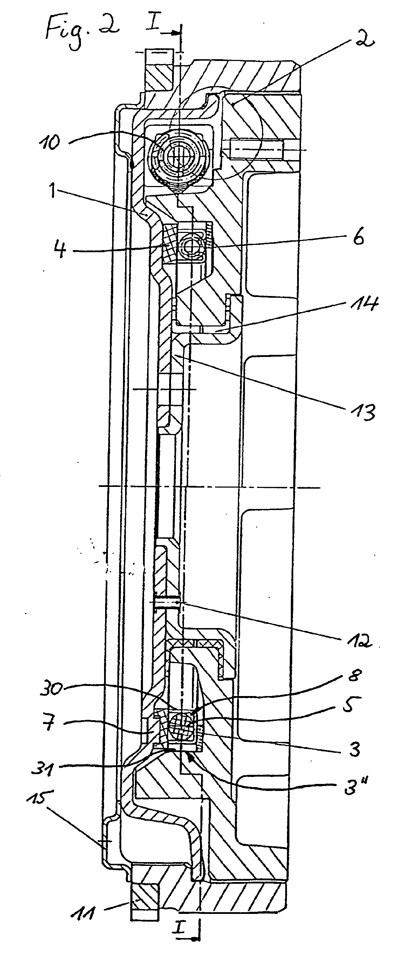

Wie aus den Figuren 1 und 2 ersichtlich, ist der Spreizring 30 an einer Stelle unterbrochen und in diese Unterbrechung ist eine tangential wirksame Vorspannfeder 6 eingesetzt. Diese bedingt eine Vorspannung des Spreizrings 30 in den Reibring 3, so daß dieser einen definierten Reibwiderstand zu der Sekundärmasse 2 aufweist. Bei geringer Last prägt dieser Reibwiderstand zusammen mit dem federnden Verhalten der Gummielemente 5 die Charakteristik des Torsionsschwingungsdämpfers. Hingegen wird die Dämpfungscharakteristik bei großer Last durch das hydraulische Verhalten der komprimierten Gummielemente 5 sowie die hieraus resultierende, sich stark erhöhende Reibung zwischen Reibring 3 und Sekundärmasse 2 geprägt.

Das zweite Ausführungsbeispiel stellt einen dem ersten Ausführungsbeispiel ähnlichen Torsionsschwingungsdämpfer dar. Bei diesem ist ein Reibring 3 mit U-förmigem Querschnitt in eine entsprechend ausgeformte Nut der Sekundärmasse 2 eingelegt und auf die Verwendung eines Spreizringes verzichtet. Die die Gummielemente 5 aufnehmenden Hohlräume 8 werden unmittelbar durch den von einem Mitnehmerring 4 abgedeckten Reibring 3 gebildet. Bei dieser Ausführungsform sind beide Schenkel des Reibringes 3 als Reibringrand 3" mit radialer Oberflächenkomponente wirksam und mit axialen Schlitzen 31 versehen.

Im Gegensatz zu der ersten Ausführungsform muß bei dieser Ausführungsform sowohl die gesamte Nut in der Sekundärmasse 2 als Kontaktfläche für den Reibring 3 als auch die Innenseite des Reibringes 3 als Kontaktfläche für die Gummielemente 5 aufwendig aufgearbeitet werden. Als Gummielemente 5 werden nicht Rundschnurringabschnitte sondern speziell angepaßte Gummiformkörper verwendet. Diese weisen an ihren tangentialen Enden annähernd den Querschnitt des Reibringes auf und sind in ihrer Mitte mit einer radial innenliegenden Ausnehmung versehen.

Zur Vorspannung des Reibringes 3 in der Nut der Sekundärmasse 2 finden drei radial wirksame Vorspannfedern 6 Verwendung, die den Reibringrand 3 an drei über den Umfang verteilten Stellen lokal nach außen drücken.

Die Funktionsweise dieser Ausführungsform entspricht der Funktionsweise der ersten Ausführungsform. Diese arbeitet spielfrei ohne Leerweg und bringt zunächst im Leerlaufbereich kleine Kräfte und Dämpfungen auf, die dann konstruktiv gestaltbar zu dem gewünschten maximalen Reibmoment anwachsen.

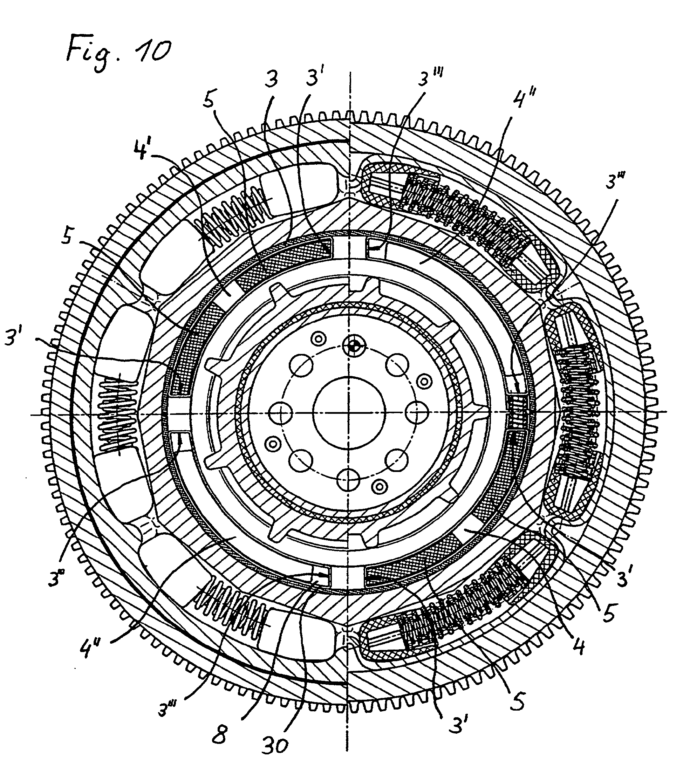

Die in Figur 9 dargestellten Verdrehkennlinien zeigen unterschiedliche Auslegungen mit verschiedener Ausspannung (A: hoch, C: niedrig) und unterschiedlichen Leerlaufwinkeln, d. h. unterschiedlicher Größe der radial innenliegenden Ausnehmungen.

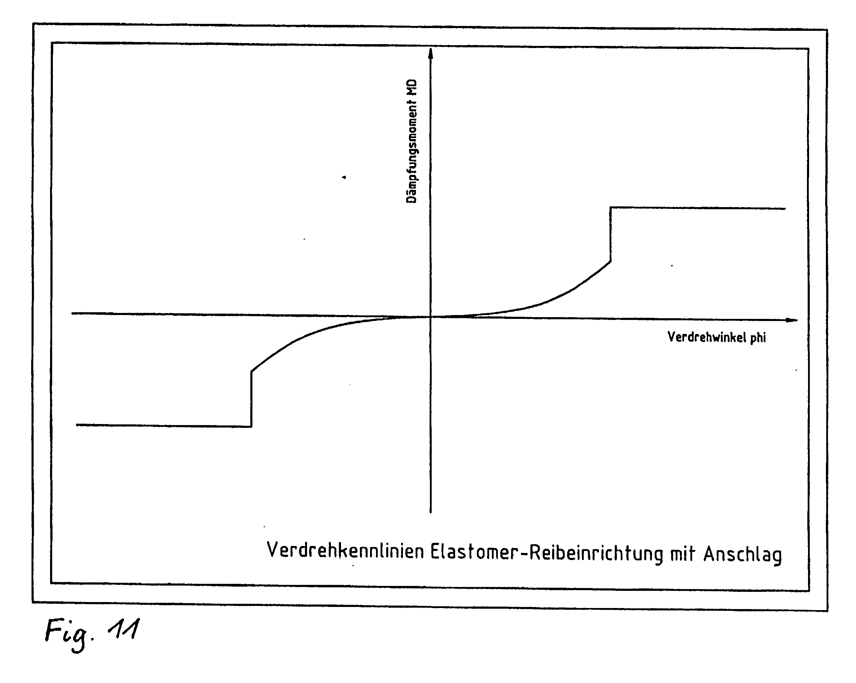

Das dritte Ausführungsbeispiel (Figuren 10 und 11) entspricht ebenfalls im wesentlichen dem ersten Ausführungsbeispiel. Dieses dritte Ausführungsbeispiel weist jedoch einen Schleppring 30 auf, der vier Hohlräume 8 umfaßt, in welche jeweils Mitnehmer 4' und 4" eingreifen. Die Mitnehmer 4' entsprechen den Mitnehmern des ersten Ausführungsbeispiels und es sind beidseits dieser Mitnehmer 4' Gummielemente 5 vorgesehen, die sowohl an den Mitnehmern 4'als auch an den Anschlägen 3' des Spreizringes 30 anliegen.

Die Mitnehmer 4" hingegen sind größer als die Mitnehmer 4' ausgebildet. Beidseits dieser Mitnehmer 4" sind keine Gummielemente vorgesehen, und die Mitnehmer 4" schlagen bei einem bestimmten Verdrehwinkel an Anschlägen 3"' des Spreizringes 30 unmittelbar an. Insofern wechselwirken die Mitnehmer 4" mit den Anschlägen 3"' im wesentlichen starr.

Der Schleppring 30 ist bezüglich der Mitnehmer 4' und 4" derart ausgestaltet, daß die Mitnehmer 4" bei einem Winkel an den Anschlägen 3"' anschlagen, bevor die Gummielemente 5 die Hohlräume 8 zur Gänze ausfüllen. Eine beispielhafte Verdrehkennlinie, die aus einer derartigen Anordnung folgt, ist in Figur 11 dargestellt. Wie aus dieser Figur ersichtlich, erfolgt bei dem gewählten bestimmten Verdrehwinkel ein schlagartiger Übergang, ab welchem der Spreizring 30 von den Mitnehmern 4" mitgenommen wird.

Es versteht sich, daß durch geeignete Abstimmung der Größen der Mitnehmer 4' und 4" die Verdrehkennlinie in geeigneter Weise gewählt werden kann.

Insbesondere ist es auch möglich, zwischen Mitnehmer 4" und Anschlag 3"' Gummielemente vorzusehen, die den dazwischenliegenden Hohlraum nicht vollständig ausfüllen.

## Patentansprüche

1. Torsionsschwingungsdämpfer, insbesondere für Kupplungen, bestehend aus
- einer Primärmasse (1) und einer hierzu begrenzt und relativ verdrehbaren Sekundärmasse (2),
- einem Schleppelement mit
- zumindest einem Mitnehmer (4,4',4") an der Primärmasse (1) bzw. Sekundärmasse (2),
- zumindest einem vom Mitnehmer (4,4',4") beaufschlagbaren elastischen Element (5) und
- mindestens einer Druckeinrichtung (30,3"), die so angeordnet ist, daß bei einer Relativdrehung von Primärmasse (1) und Sekundärmasse (2) vom Mitnehmer (4,4'') ausgehend über das elastische Element (5) eine auf die Druckeinrichtung (30,3") wirkende Kraft eine erhöhte Reibung an der Sekundärmasse (2) bzw. Primärmasse (1) erzeugt,
**dadurch gekennzeichnet, daß**
das Schleppelement separat zum elastischen Element (5) zumindest ein an der Sekundärmasse (2) bzw. Primärmasse (1) reibwirksames Reibelement (3) mit Druckeinrichtung (30,3") aufweist, die so mit dem elastischen Element (5) in Wirkverbindung steht, daß die von dem elastischen Element auf die Druckeinrichtung (30) wirkende und auf das Reibelement (3) ausgeübte Kraft die Reibung des Reibelementes (3) mit der Sekundärmasse (2) bzw. der Primärmasse (1) erhöht.

2. Torsionsschwingungsdämpfer nach Anspruch 1, ***dadurch gekennzeichnet, daß*** das elastische Element ein in einem Hohlraum (8) angeordnetes gummiartiges Element (5) aufweist.

3. Torsionsschwingungsdämpfer nach Anspruch 2, ***dadurch gekennzeichnet, daß*** das gummiartige Element (5) in tangentialer Richtung spielfrei in den Hohlraum (8) angeordnet ist.

4. Torsionsschwingungsdämpfer nach Anspruch 2 oder 3, ***dadurch gekennzeichnet, daß*** der Hohlraum (8) in radialer Richtung durch die Druckeinrichtung (30, 3") begrenzt wird.

5. Torsionsschwingungsdämpfer nach einem der Ansprüche 2 bis 4, ***dadurch gekennzeichnet, daß*** das Volumen des Hohlraums (8) bei einer relativen Drehbewegung zwischen Primärmasse (1) und Sekundärmasse (2) verringert wird.

6. Torsionsschwingungsdämpfer nach Anspruch 5, ***dadurch gekennzeichnet, daß*** die Volumenverringerung im wesentlichen in tangentialer Richtung erfolgt.

7. Torsionsschwingungsdämpfer nach einem der Ansprüche 1 bis 6, ***dadurch gekennzeichnet, daß*** die Druckeinrichtung (30, 3") radial wirksam ist.

8. Torsionsschwingungsdämpfer nach einem der Ansprüche 1 bis 7, ***dadurch gekennzeichnet, daß*** das Reibelement zumindest eine Vorspannfeder (6) umfaßt, welche auch bei durch das elastische Element unbeaufschlagter oder wenig beaufschlagter Druckeinrichtung (30, 3") einen Mindestreibwert zwischen Reibelement und Primärmasse (1) oder Sekundärmasse (2) bedingt.

9. Torsionsschwingungsdämpfer nach einem der Ansprüche 1 bis 8, ***dadurch gekennzeichnet, daß*** in tangentialer Richtung beidseits des Mitnehmers (4') jeweils ein elastisches Element angeordnet sind, an welchem seinerseits jeweils ein Anschlag (3') in tangentialer Richtung angeordnet ist.

10. Torsionsschwingungsdämpfer nach einem der Ansprüche 1 bis 9, ***dadurch gekennzeichnet, daß*** in tangentialer Richtung beidseits eines Anschlags (3') jeweils ein elastisches Element angeordnet sind, an welchem seinerseits jeweils ein Mitnehmer (4') in tangentialer Richtung angeordnet ist.

11. Torsionsschwingungsdämpfer nach einem der Ansprüche 1 bis 10, ***dadurch gekennzeichnet, daß*** der Mitnehmer (4') wenigstens eine Ausnehmung aufweist, in die ein Nocken (7) der Primärmasse (1) oder der Sekundärmasse (2) eingreift:

12. Torsionsschwingungsdämpfer nach einem der Ansprüche 1 bis 11, ***dadurch gekennzeichnet, daß*** das Reibelement zumindest einen Reibring (3) umfaßt.

13. Torsionsschwingungsdämpfer nach Anspruch 12, ***dadurch gekennzeichnet, daß*** der Reibring (3) einen im wesentlichen L-förmigen Querschnitt mit einem radial außen liegenden Schenkel aufweist, wobei zumindest die radial außen liegende Oberfläche dieses Schenkels als Reibfläche (3") dient.

14. Torsionsschwingungsdämpfernach Anspruch 13, ***dadurch gekennzeichnet, daß*** der Reibring (3) in einer entsprechend ausgeformten Aussparung der Primärmasse (1) oder der Sekundärmasse (2) reibend rotierbar angeordnet ist.

15. TorsionsschwingungsdämpfernachAnspruch 12, ***dadurch gekennzeichnet, daß*** der Reibring (3) einen im wesentlichen U-förmigen, in eine axiale Richtung offenen Querschnitt aufweist und zumindest die radial außen liegende Oberfläche des Reibringes (3) als Reibfläche (3") dient.

16. Torsionsschwingungsdämpfer nach Anspruch 13 oder 15, ***dadurch gekennzeichnet, daß*** der Reibring (3) in einer im wesentlichen U-förmigen Nut der Primärmasse (1) oder der Sekundärmasse (2) reibend rotierbar angeordnet ist.

17. Torsionsschwingungsdämpfer nach einem der Ansprüche 1 bis 16, ***dadurch gekennzeichnet, daß*** das Reibelement zumindest eine Reibfläche (3") mit einer radialen Oberflächenkomponente aufweist.

18. Torsionsschwingungsdämpfer nach einem der Ansprüche 3, 15 und 17, ***dadurch gekennzeichnet, daß*** in der eine radiale Oberflächenkomponente aufweisenden Reibfläche (3") axiale Schlitze (31) vorgesehen sind.

19. Torsionsschwingungsdämpfer nach einem der Ansprüche 1 bis 18, ***dadurch gekennzeichnet, daß*** das Schleppelement als ein Schleppring im wesentlichen ringförmig ausgebildet ist.

20. Torsionsschwingungsdämpfer nach Anspruch 19, ***dadurch gekennzeichnet, daß*** der Schleppring einen Mitnehmerring (4) umfaßt, der den Mitnehmer (4') aufweist.

21. Torsionsschwingungsdämpfer nach Anspruch 19 oder 20, ***dadurch gekennzeichnet, daß*** das Reibelement einen Reibring (3) und einen Spreizring (30), der zumindest einen Anschlag (3') aufweist und im wesentlichen U-förmig, in eine axiale Richtung offen ausgebildet ist, umfaßt,
- daß der Schleppring einen Mitnehmerring (4) mit zumindest einem Mitnehmer (4') umfaßt,
- daß der Mitnehmerring (4) auf der offenen Seite des Spreizringes (30) angeordnet ist, der Mitnehmer (4') in die offene Seite eingreift und hierdurch zumindest ein im wesentlichen abgeschlossener Hohlraum (8) entsteht, in dem das elastische Element angeordnet ist, und
- daß der Spreizring (30) derart bezüglich des Reibringes (3) angeordnet ist, daß bei einer axialen und/oder radialen Expansion oder Verlagerung des Spreizringes die Reibung des Reibringes (3) mit der Sekundärmasse (2) oder mit der Primärmasse (1) erhöht wird.

22. Torsionsschwingungsdämpfer nach Anspruch 21, ***dadurch gekennzeichnet*, *daß*** der Spreizring (30) und der Reibring (3) als eine Baugruppe ausgebildet sind.

23. Torsionschwingungsdämpfer nach Anspruch 21 oder 22, ***dadurch gekennzeichnet, daß*** der Spreizring (30) an wenigstens einer Stelle unterbrochen ist und in diese Unterbrechung eine tangential wirksame Vorspannfeder (6) eingesetzt ist.

24. Torsionsschwingungsdämpfer nach einem der Ansprüche 1 bis 23, ***dadurch gekennzeichnet, daß*** das Schleppelement (30) einen weiteren Mitnehmer (4") umfaßt, der mit einem Anschlag (3"') ab einem bestimmten Verdrehwinkel wechselwirkt.

25. Torsionsschwingungsdämpfer nach Anspruch 24, ***dadurch gekennzeichnet, daß*** der Mitnehmer (4") und der Anschlag (3"') im wesentlichen starr miteinander wechselwirken.

26. Torsionsschwingungsdämpfer nach Anspruch 24, ***dadurch gekennzeichnet, daß*** der Mitnehmer (4") und der Anschlag (3"') im wesentlichen elastisch miteinander wechselwirken.

## Claims

1. A torsional vibration damper, more specifically for a clutch, consisting of
- a primary mass (1) and a secondary mass (2) limitedly and relatively rotatable with respect thereto,
- a drag element with
- at least one driver member (4, 4', 4") on a respective one of the primary mass (1) and the secondary mass (2),
- at least one elastic element (5) adapted to be loaded by said driver (4, 4', 4") and
- at least one pressure mechanism (30, 3") that is disposed in such a manner that, when the primary mass (1) and the secondary mass (2) are rotating relative to one another, a force originating from the driver member (4, 4") and acting through the elastic element (5) onto the pressure mechanism (30, 3") produces an increased friction on the secondary mass (2) or on the primary mass (1),
***characterized in that***
the drag element comprises, separate from the elastic element (5), at least one friction element (3) which is frictionally operative on the secondary mass (2) and on the primary mass (1) respectively and has a pressure mechanism (30, 3") that is work-connected to the elastic element (5) in such a manner that the force from the elastic element acting onto the pressure mechanism (30) and exerted onto the friction element (3) increases the friction between the friction element (3) and a respective one of the secondary mass (2) and the primary mass (1).

2. The torsional vibration damper as set forth in claim 1, ***characterized in that*** the elastic element comprises a rubber-type element (5) disposed in a cavity (8).

3. The torsional vibration damper as set forth in claim 2, ***characterized in that*** the rubber-type element (5) is disposed in the cavity (8) with zero clearance in a tangential direction.

4. The torsional vibration damper as set forth in claim 2 or 3, ***characterized in that*** the cavity (8) is bounded in radial direction by the pressure mechanism (30, 3").

5. The torsional vibration damper as set forth in any one of the claims 2 through 4, ***characterized in that*** the volume of the cavity (8) diminishes when the primary mass (1) and the secondary mass (2) are rotating relative to one another.

6. The torsional vibration damper as set forth in claim 5, ***characterized in that*** the volume diminishes substantially in the tangential direction.

7. The torsional vibration damper as set forth in any one of the claims 1 through 6, ***characterized in that*** the pressure mechanism (30, 3") is radially active.

8. The torsional vibration damper as set forth in any one of the claims 1 through 7, ***characterized in that*** the friction element includes at least one biasing spring (6) that effects a minimum coefficient of friction between the friction element and the primary mass (1) or secondary mass (2) even if the pressure mechanism (30, 3") is not or only slightly loaded by the elastic element.

9. The torsional vibration damper as set forth in any one of the claims 1 through 8, ***characterized in that**,* on either side of the driver member (4') when viewed in the tangential direction, there is disposed an elastic element on which in turn there is disposed a limit stop (3') in the tangential direction.

10. The torsional vibration damper as set forth in any one of the claims 1 through 9, ***characterized in that,*** on either side of a limit stop (3') when viewed in the tangential direction, there is disposed an elastic element on which in turn there is disposed a driver member (4') in the tangential direction.

11. The torsional vibration damper as set forth in any one of the claims 1 through 10, ***characterized in that*** the driver member (4') comprises at least one recess that engages a cam (7) of the primary mass (1) or of the secondary mass (2).

12. The torsional vibration damper as set forth in any one of the claims 1 through 11, ***characterized in that*** the friction element includes at least one friction ring (3).

13. The torsional vibration damper as set forth in claim 12, ***characterized in that*** the friction ring (3) comprises a substantially L-shaped cross section with a leg lying radially outside, with at least that surface of said leg that is lying radially outside serving as a friction surface.

14. The torsional vibration damper as set forth in claim 13, ***characterized in that*** the friction ring (3) is frictionally and rotatably disposed in a correspondingly formed cutout in the primary mass (1) or in the secondary mass (2).

15. The torsional vibration damper as set forth in claim 12, ***characterized in that*** the friction ring (3) comprises a substantially U-shaped cross section that is open in an axial direction and that at least that surface of the friction ring (3) that lies radially outside serves as a friction surface (3").

16. The torsional vibration damper as set forth in claim 13 or 15, ***characterized in that*** the friction ring (3) is frictionally and rotatably disposed in a substantially U-shaped groove of the primary mass (1) or of the secondary mass (2).

17. The torsional vibration damper as set forth in any one of the claims 1 through 16, ***characterized in that*** the friction element comprises at least one friction surface (3") with a radial surface component.

18. The torsional vibration damper as set forth in any one of the claims 3, 15 and 17, ***characterized in that*** axial slots (31) are provided in the friction surface (3") comprising a radial surface component.

19. The torsional vibration damper as set forth in any one of the claims 1 through 18, ***characterized in that*** the drag element, which is a drag ring, is configured to be substantially annular.

20. The torsional vibration damper as set forth in claim 19, ***characterized in that*** the drag ring includes a driver ring (4) that comprises the driver member (4').

21. The torsional vibration damper as set forth in claim 19 or 20, ***characterized in that*** the friction element includes a friction ring (3) and an expander ring (30), which comprises at least one limit stop (3') and is configured to be substantially U-shaped and open in one axial direction,
- that the drag ring includes a driver ring (4) with at least one driver member (4'),
- that the driver ring (4) is disposed on the open side of the expander ring (30), the driver member (4') engages the open side so that at least one substantially closed cavity (8) is obtained in which there is disposed the elastic element and
- that the expander ring (30) is disposed in such a manner with respect to the friction ring (3) that upon axial and/or radial expansion or displacement of the expander ring the friction between the friction ring (3) and the secondary mass (2) or the primary mass (1) is increased.

22. The torsional vibration damper as set forth in claim 21, ***characterized in that*** the expander ring (30) and the friction ring (3) are configured to be one structural component.

23. The torsional vibration damper as set forth in claim 21 or 22, ***characterized in that*** the expander ring (30) is interrupted at one point at least and that a tangentially active biasing spring (6) is inserted into said interrupted portion.

24. The torsional vibration damper as set forth in any one of the claims 1 through 23, ***characterized in that*** the drag element (30) includes another driver member (4") that interacts with a limit stop (3"') upon reaching a certain angle of rotation.

25. The torsional vibration damper as set forth in claim 24, ***characterized in that*** the driver member (4") and the limit stop (3"') interact with each other in a substantially rigid manner.

26. The torsional vibration damper as set forth in claim 24, ***characterized in that*** the driver member (4") and the limit stop (3"') interact with each other in a substantially elastic manner.

## Revendications

1. Amortisseur de vibrations de torsion, notamment pour des embrayages, consistant en
- une masse primaire (1) et une masse secondaire (2) mobile en rotation par rapport à celle-ci de façon limitée,
- un élément d'entraînement avec
- au moins un entraîneur (4, 4', 4") sur la masse primaire (1) et la masse secondaire (2) respectivement,
- au moins un élément élastique (5) apte à être sollicité par l'entraîneur (4, 4', 4") et
- au moins un organe presseur (30, 3") qui est disposé de telle sorte que, lorsque la masse primaire (1) et la masse secondaire (2) effectuent une rotation l'une par rapport à l'autre, une force, partant de l'entraîneur (4, 4") et passant par l'élément élastique (5) et agissant sur l'organe presseur (30, 3") génère un frottement plus important sur la masse secondaire (2) et sur la masse primaire (1) respectivement,
**caractérisé en ce que**
l'élément d'entraînement comporte, séparé de l'élément élastique (5), au moins un élément de frottement (3) qui agit par frottement sur la masse secondaire (2) et sur la masse primaire (1) respectivement et qui comporte un organe presseur (30, 3") agissant conjointement à l'élément élastique (5) de telle sorte que la force de l'élément élastique agissant sur l'organe presseur (30) et exercée sur l'élément de frottement (3) accentue le frottement entre l'élément de frottement (3) et la masse secondaire (2) et la masse primaire (1) respectivement.

2. Amortisseur de vibrations de torsion selon la revendication 1, ***caractérisé en ce que*** l'élément élastique comporte un élément du type caoutchouc (5) disposé dans une cavité (8).

3. Amortisseur de vibrations de torsion selon la revendication 2, ***caractérisé en ce que*** l'élément du type caoutchouc (5) est monté sans jeu suivant la direction tangentielle dans la cavité (8).

4. Amortisseur de vibrations de torsion selon la revendication 2 ou 3, ***caractérisé en ce que*** la cavité (8) est délimitée suivant la direction radiale par l'organe presseur (30, 3").

5. Amortisseur de vibrations de torsion selon l'une quelconque des revendications 2 à 4, ***caractérisé en ce que*** le volume de la cavité (8) diminue lorsque la masse primaire (1) et la masse secondaire (2) effectuent une rotation l'une par rapport à l'autre.

6. Amortisseur de vibrations de torsion selon la revendication 5, ***caractérisé en ce que*** le volume diminue sensiblement suivant la direction tangentielle.

7. Amortisseur de vibrations de torsion selon l'une quelconque des revendications 1 à 6, ***caractérisé en ce que*** l'organe presseur (30, 3") agit sensiblement radialement.

8. Amortisseur de vibrations de torsion selon l'une quelconque des revendications 1 à 7, ***caractérisé en ce que*** l'élément de frottement comprend au moins un ressort de précontrainte (6) qui provoque un coefficient de frottement minimum entre l'élément de frottement et la masse primaire (1) ou la masse secondaire (2) même lorsque l'organe presseur (30, 3") n'est pas ou peu sollicité par l'élément élastique.

9. Amortisseur de vibrations de torsion selon l'une quelconque des revendications 1 à 8, ***caractérisé en ce que*** de part et d'autre de l'entraîneur (4') dans la direction tangentielle est disposé un élément élastique sur lequel à son tour est disposée suivant la direction tangentielle une butée (3').

10. Amortisseur de vibrations de torsion selon l'une quelconque des revendications 1 à 9, ***caractérisé en ce que*** de part et d'autre d'une butée (3') dans la direction tangentielle est disposé un élément élastique sur lequel à son tour est disposé suivant la direction tangentielle un entraîneur (4').

11. Amortisseur de vibrations de torsion selon l'une quelconque des revendications 1 à 10, ***caractérisé en ce que*** l'entraîneur (4') comporte au moins un évidement dans lequel s'engage un bossage (7) de la masse primaire (1) ou de la masse secondaire (2).

12. Amortisseur de vibrations de torsion selon l'une quelconque des revendications 1 à 11, ***caractérisé en ce que*** l'élément de frottement comprend au moins une bague de frottement (3).

13. Amortisseur de vibrations de torsion selon la revendication 12, ***caractérisé en ce que*** la bague de frottement (3) comporte une section sensiblement en L avec une branche radialement extérieure, du moins la surface radialement extérieure de cette branche servant de surface de frottement (3").

14. Amortisseur de vibrations de torsion selon la revendication 13, ***caractérisé en ce que*** la bague de frottement (3) est disposée mobile en rotation de manière à produire un frottement dans une découpe pratiquée de manière correspondante dans la masse primaire (1) ou dans la masse secondaire (2).

15. Amortisseur de vibrations de torsion selon la revendication 12, ***caractérisé en ce que*** la bague de frottement (3) comporte une section sensiblement en U ouvert suivant une direction axiale et que du moins la surface radialement extérieure de la bague de frottement (3) sert de surface de frottement (3").

16. Amortisseur de vibrations de torsion selon la revendication 13 ou 15, ***caractérisé en ce que*** la bague de frottement (3) est disposée mobile en rotation de manière à produire un frottement dans une gorge sensiblement en U de la masse primaire (1) ou de la masse secondaire (2).

17. Amortisseur de vibrations de torsion selon l'une quelconque des revendications 1 à 16, ***caractérisé en ce que*** l'élément de frottement comporte au moins une surface de frottement (3") avec une composante de surface radiale.

18. Amortisseur de vibrations de torsion selon l'une quelconque des revendications 3, 15 et 17, ***caractérisé en ce que*** des fentes axiales (31) sont prévues dans la surface de frottement (3") comportant une composante de surface radiale.

19. Amortisseur de vibrations de torsion selon l'une quelconque des revendications 1 à 18, ***caractérisé en ce que*** l'élément d'entraînement sous forme de bague d'entraînement est conformé sensiblement en forme de bague.

20. Amortisseur de vibrations de torsion selon la revendication 19, ***caractérisé en ce que*** la bague d'entraînement comprend une bague entraîneuse (4) comportant l'entraîneur (4').

21. Amortisseur de vibrations de torsion selon la revendication 19 ou 20, ***caractérisé en ce que*** l'élément de frottement comprend une bague de frottement (3) et un expandeur (30) qui comporte au moins une butée (3') et est conformé sensiblement en U ouvert suivant une direction axiale,
- que la bague d'entraînement comprend une bague entraîneuse (4) avec au moins un entraîneur (4'),
- que la bague entraîneuse (4) est disposée du côté ouvert de l'expandeur (30), que l'entraîneur (4') s'engage dans le côté ouvert de sorte que l'on obtient ainsi au moins une cavité (8) sensiblement close dans laquelle est disposé l'élément élastique et
- que l'expandeur (30) est disposé de telle sorte par rapport à la bague de frottement (3) que lors d'une expansion ou d'un déplacement axial et/ou radial de l'expandeur le frottement entre la bague de frottement (3) et la masse secondaire (2) ou la masse primaire (1) est accentué.

22. Amortisseur de vibrations de torsion selon la revendication 21, ***caractérisé en ce que*** l'expandeur (30) et la bague de frottement (3) forment à eux deux un sous-ensemble.

23. Amortisseur de vibrations de torsion selon la revendication 21 ou 22, ***caractérisé en ce que*** l'expandeur (30) est interrompu à au moins un endroit et qu'un ressort de précontrainte (6) à action tangentielle est inséré dans cette ouverture.

24. Amortisseur de vibrations de torsion selon l'une quelconque des revendications 1 à 23, ***caractérisé en ce que*** l'élément d'entraînement (30) comprend encore un autre entraîneur (4") qui interagit avec une butée (3"') à partir d'un certain angle de rotation.

25. Amortisseur de vibrations de torsion selon la revendication 24, ***caractérisé en ce que*** l'entraîneur (4") et la butée (3"') interagissent mutuellement de manière sensiblement rigide.

26. Amortisseur de vibrations de torsion selon la revendication 24, ***caractérisé en ce que*** l'entraîneur (4") et la butée (3"') interagissent mutuellement de manière sensiblement élastique.
